# EUROPÄISCHE PATENTANMELDUNG

(11) **EP 2 974 813 A1**
(43) Veröffentlichungstag der Anmeldung: **20.01.2016**
(21) Anmeldenummer: 14177355.6
(22) Anmeldetag: 17.07.2014
(51) Int. Cl.: B22F 3/105, B29C 67/00

(54) **ANLAGE UND VERFAHREN ZUR GENERATIVEN HERSTELLUNG UND/ODER REPARATUR VON BAUTEILEN**

(71) Anmelder: MTU Aero Engines AG, 80995 München (DE)
(72) Erfinder: Heß, Thomas, 81541 München (DE); Schlick, Georg, 80809 München (DE); Ladewig, Alexander, 83707 Bad Wiessee (DE)

(57) **Zusammenfassung**

Die vorliegende Erfindung betrifft eine Anlage zur generativen Herstellung und/oder Reparatur von Bauteilen, insbesondere von Gasturbinen, mit einem Verfestigungsmittel (3) zum schichtweisen, lokalen, insbesondere optischen, thermischen und/oder chemischen, Verfestigen von, insbesondere pulverförmigem, körnigem und/oder flüssigem, Material, und einem Elektroabscheidemittel (1.1, 7-10) zum elektrostatischen Abscheiden von Partikeln (6) und/oder Gas aus einem Bereich zwischen einer zu verfestigenden und/oder verfestigten Schicht (2.1) des Materials und dem Verfestigungsmittel (3) sowie ein Verfahren zur generativen Herstellung und/oder Reparatur von Bauteilen, insbesondere von Gasturbinen, mittels einer solchen Anlage.

## Beschreibung

Die vorliegende Erfindung betrifft eine Anlage und ein Verfahren zur generativen Herstellung und/oder Reparatur von Bauteilen, insbesondere von Gasturbinen.

Insbesondere komplexe und/oder hoch beanspruchte Bauteile wie Schaufeln von Gasturbinen können vorteilhaft generativ bzw. additiv hergestellt und repariert werden. Dabei wird Material schichtweise lokal verfestigt und mit einer benachbarten Schicht bereits verfestigten Materials verbunden. Um ein Bauteil neu herzustellen, wird dabei eine erste Schicht auf einem Träger verfestigt, von dem sie nach erfolgter Herstellung des Bauteils gelöst wird. Um ein bereits vorhandenes Bauteil zu reparieren, wird dieses auf dem Träger angeordnet und eine erste Schicht auf dem Bauteil verfestigt.

Insbesondere durch das Anordnen einer neuen Schicht zu verfestigenden Materials und/oder durch deren Verfestigen können Partikel und/oder Gas in den Bereich zwischen der zu verfestigenden oder verfestigten Schicht des Materials und einem Verfestigungsmittel gelangen. So können beispielsweise beim Aufbringen und/oder Verteilen pulverförmigen Materials Partikel aufgewirbelt werden. Zusätzlich oder alternativ kann zum Beispiel bei einer Verfestigung Schmauch aufsteigen. Dieser kann zwischen der Schicht und dem Verfestigungsmittel zu Partikeln kondensieren.

Gleichermaßen können auch andere Partikel, beispielsweise Staub oder dergleichen, und/oder Gas von der Umgebung in den Bereich zwischen der Schicht und dem Verfestigungsmittel gelangen.

Solche Partikel und solches Gas können insbesondere eine Beaufschlagung zu verfestigenden Materials durch das Verfestigungsmittel stören, beispielsweise einen Laserstrahl ablenken und/oder reflektieren. Zusätzlich oder alternativ können sie auch eine zu verfestigende oder verfestigte Schicht des Materials beeinträchtigen, beispielsweise Einschlüsse darin oder eine Deckschicht darauf bilden oder dergleichen. Eine Aufgabe einer Ausführung der vorliegenden Erfindung ist es, die generative Herstellung und/oder Reparatur von Bauteilen zu verbessern.

Diese Aufgabe wird durch eine Anlage mit den Merkmalen des Anspruchs 1 bzw. ein Verfahren mit den Merkmalen des Anspruchs 8 gelöst. Vorteilhafte Ausführungsformen der Erfindung sind Gegenstand der Unteransprüche.

Nach einem Aspekt der vorliegenden Erfindung weist eine Anlage zur generativen Herstellung und/oder Reparatur von Bauteilen, insbesondere von Gasturbinen, ein Verfestigungsmittel zum schichtweisen und lokalen Verfestigen von zu verfestigendem Material auf.

Das zu verfestigende Material ist in einer Ausführung pulverförmig oder körnig. Gleichermaßen kann es auch flüssig, insbesondere pastös, sein. Das Verfestigungsmittel kann das Material in einer Ausführung optisch, vorzugsweise durch ein Leuchtmittel, insbesondere einen Laser, beaufschlagen und hierdurch verfestigen bzw. hierzu eingerichtet sein. Gleichermaßen kann das Verfestigungsmittel das Material in einer Ausführung thermisch, vorzugsweise durch ein Heiz- oder Kühlmittel, beaufschlagen und hierdurch verfestigen bzw. hierzu eingerichtet sein. Gleichermaßen kann das Verfestigungsmittel das Material in einer Ausführung chemisch, vorzugsweise durch einen Druckerkopf, beaufschlagen und hierdurch verfestigen bzw. hierzu eingerichtet sein.

In einer Ausführung weist die Anlage eine Aufnahme für das zu verfestigende Material, insbesondere mit zu verfestigendem Material, auf. Die Aufnahme weist in einer Weiterbildung einen, insbesondere rahmenartigen, Behälter für das zu verfestigende Material, insbesondere mit zu verfestigendem Material, auf, insbesondere ein Pulverbett. Zusätzlich oder alternativ weist die Aufnahme in einer Weiterbildung einen Träger auf, auf dem in einer Ausführung eine erste Schicht, die nach erfolgter Herstellung des Bauteils von dem Träger gelöst wird, oder ein bereits vorhandenes Bauteil angeordnet wird, bzw. der hierzu vorgesehen bzw. eingerichtet ist. Träger und Behälter sind in einer Ausführung relativ zueinander verstellbar, um so jeweils neue Schichten zu verfestigenden Materials anzuordnen. Insbesondere kann der Träger in dem, insbesondere stationären, Behälter verfahrbar sein bzw. verfahren werden. Gleichermaßen kann der Behälter an dem, insbesondere stationären, Träger verfahrbar sein bzw. verfahren werden.

In einer Ausführung weist die Anlage ein Schichtmittel zum aufeinanderfolgenden Anordnen von Schichten des zu verfestigenden Materials auf Schichten bereits verfestigten Materials auf. Das Schichtmittel weist in einer Weiterbildung ein Ausgabemittel zum Ausgeben von zu verfestigendem Material auf, insbesondere einen weiteren Behälter, der vorzugsweise verfahrbar ist und/oder eine verschließbare Ausgabeöffnung aufweist. Zusätzlich oder alternativ weist das Schichtmittel in einer Weiterbildung ein, vorzugsweise verfahrbares, Verteilmittel zum Verteilen von zu verfestigendem Material zu einer zu verfestigenden Schicht des Materials auf, insbesondere einen verfahrbaren Rechen, Rakel, Spatel, Schieber, Abstreifer oder dergleichen. Vorzugsweise sind Ausgabe- und/oder Verteilmittel relativ zu der Aufnahme, insbesondere dem Behälter und/oder Träger, verstellbar.

Nach einem Aspekt der vorliegenden Erfindung weist die Anlage ein Elektroabscheidemittel zum elektrostatischen Abscheiden von Partikeln und/oder Gas aus einem Bereich zwischen einer zu verfestigenden und/oder verfestigten Schicht des Materials und dem Verfestigungsmittel, insbesondere einem Bereich zwischen der Aufnahme und dem Verfestigungsmittel, auf.

Durch ein solches Elektroabscheidemittel, das dem Fachmann insbesondere von Elektro-(Staub)Filtern, elektrischer Gasreinigung, Elektrostat ("electrostatic precipitator") oder Elektro-(Staub)Abscheidern an sich bekannt ist, können störende Partikel und/oder störendes Gas aus dem Bereich zwischen einer wenigstens teilweise noch zu verfestigenden und/oder wenigstens teilweise bereits verfestigten Schicht des Materials und dem Verfestigungsmittel vorteilhaft entfernt werden. Dadurch kann in einer Ausführung eine Störung einer Beaufschlagung zu verfestigenden Materials durch das Verfestigungsmittel durch solche Partikel bzw. solches Gas reduziert, vorzugsweise wenigstens im Wesentlichen verhindert, werden. Zusätzlich oder alternativ kann in einer Ausführung eine Beeinträchtigung einer zu verfestigenden und/oder verfestigten Schicht des Materials durch solche Partikel bzw. solches Gas reduziert, vorzugsweise wenigstens im Wesentlichen verhindert, werden.

Das Elektroabscheidemittel scheidet in einer Ausführung Partikel und/oder Gas elektrostatisch ab bzw. ist hierzu vorgesehen bzw. eingerichtet, die bzw. das durch das Anordnen einer neuen Schicht zu verfestigenden Materials und/oder durch deren Verfestigen in den Bereich gelangen, insbesondere aufgewirbelte Partikel pulverförmigen Materials und/oder, insbesondere zu Partikeln kondensierten, Schmauch, der beim Verfestigen des Materials entsteht. Zusätzlich oder alternativ scheidet das Elektroabscheidemittel in einer Ausführung andere Partikel und/oder anderes Gas elektrostatisch ab bzw. ist hierzu vorgesehen bzw. eingerichtet, beispielsweise Staub oder dergleichen aus der Umgebung.

In einer Ausführung scheidet das Elektroabscheidemittel Partikel elektrostatisch ab bzw. ist hierzu eingerichtet, deren, insbesondere maximale oder gemittelte, Größe und/oder Masse höchstens die Hälfte, insbesondere höchstens 10% einer, insbesondere maximalen oder gemittelten, Größe bzw. Masse des zu verfestigenden, insbesondere körnigen oder pulverförmigen, Materials und/oder höchstens 0,1 mm, insbesondere höchstens 10 µm, beträgt, insbesondere zu Partikel kondensierten Schmauch, der bei der Verfestigung entsteht. Hierdurch können vorteilhaft einerseits störende Partikel entfernt werden, während andererseits das zu verfestigende Material selber nicht oder nur wenig beeinflusst wird.

Das Elektroabscheidemittel weist in einer Ausführung eine ein- oder mehrteilige Abscheideelektrode sowie eine ein- oder mehrteilige Gegenelektrode, insbesondere Sprühelektrode auf. Die Abscheide- und/oder die Gegenelektrode können insbesondere seitlich und/oder oberhalb bzw. auf einer der Schicht gegenüberliegenden Seite von dem Bereich zwischen der zu verfestigenden und/oder verfestigten Schicht und dem Verfestigungsmittel, aus dem die Partikel und/oder das Gas abzuscheiden sind, angeordnet sein bzw. werden, insbesondere diesen Bereich begrenzen. Sie können jeweils insbesondere ein oder mehrere Rohre oder, insbesondere ebene, Platten aufweisen. Platten können insbesondere vorteilhaft gereinigt werden und/oder eine vorteilhafte Strömung der abzuscheidenden Partikel bzw. des abzuscheidenden Gases realisieren.

In einer Ausführung ist bzw. wird die Gegenelektrode von der Abscheideelektrode wenigstens 1 cm und/oder höchstens 100 cm, insbesondere höchstens 50 cm, vorzugsweise höchstens 10 cm beabstandet. Das Elektroabscheidemittel weist in einer Ausführung eine Spannungsquelle zum Anlegen einer Gleich- oder Wechselspannung zwischen der Abscheide- und Gegenelektrode, insbesondere von wenigstens 15 kV, insbesondere wenigstens 25 kV, und/oder höchstens 85 kV, insbesondere höchstens 75 kV, und in einer Weiterbildung ein, insbesondere programmierbares, Steuermittel zum Steuern einer zwischen der Abscheide- und Gegenelektrode angelegten Spannung auf. Unter einem Steuern wird vorliegend insbesondere auch ein Regeln bzw. das Vorgeben einer ein- oder mehrdimensionalen Stellgröße auf Basis einer vorgegebenen Soll- und einer erfassten, rückgeführten Ist-Größe verstanden.

Das Steuermittel steuert in einer Ausführung eine zwischen der Abscheide- und der Gegenelektrode angelegte Spannung, insbesondere in Abhängigkeit von einem lokalen Verfestigen einer Schicht des Materials und/oder einer, insbesondere gemessenen, Konzentration von abzuscheidenden Partikeln und/oder abzuscheidendem Gas in dem Bereich, bzw. ist hierzu eingerichtet.

Insbesondere kann das Steuermittel eine Spannung zum Abscheiden von Partikeln und/oder Gas anlegen bzw. hierzu eingerichtet sein, wenn eine gemessene Konzentration von abzuscheidenden Partikeln bzw. abzuscheidendem Gas in dem Bereich einen vorgegebenen Grenzwert übersteigt, oder jeweils während einem Verfestigen einer Schicht des Materials und/oder für eine vorgegebene Zeit davor und/oder danach. Zusätzlich oder alternativ kann das Steuermittel in einer Ausführung eine Größe einer angelegten Spannung in Abhängigkeit von einer gemessenen Konzentration von abzuscheidenden Partikeln und/oder abzuscheidendem Gas in dem Bereich, beispielsweise proportional hierzu, vorgeben bzw. hierzu eingerichtet sein.

In einer Ausführung sind ein oder mehrere Elektroden, insbesondere die vorstehend genannte Abscheide- und/oder Gegenelektrode, aufnahmefest bzw. relativ zu der Aufnahme stationär.

In einer Weiterbildung sind ein oder mehrere Elektroden, insbesondere die vorstehend genannte Abscheide- und/oder Gegenelektrode, behälterfest bzw. relativ zu dem Behälter der Aufnahme stationär. Insbesondere kann eine solche Elektrode eine Behälterwand des Behälters aufweisen bzw. eine Behälterwand des Behälters eine solche Elektrode bilden, vorzugsweise, indem die Behälterwand elektrisch leitend mit der Spannungsquelle verbunden wird bzw. ist. Gleichermaßen kann eine behälterfeste Elektrode gegen eine Behälterwand des Behälters elektrisch isoliert sein bzw. werden. Zusätzlich oder alternativ sind in einer Weiterbildung ein oder mehrere Elektroden, insbesondere die vorstehend genannte Abscheide- und/oder Gegenelektrode, trägerfest bzw. relativ zu dem Träger der Aufnahme stationär. Insbesondere kann der Träger elektrisch leitend mit der Spannungsquelle verbunden werden bzw. sein. So kann in einer Ausführung durch die Spannungsquelle eine Potentialdifferenz bzw. Spannung zwischen einer gegen eine Behälterwand des Behälters elektrisch isolierten Elektrode, insbesondere einer ein- oder mehrteiligen Abscheide- oder Gegenelektrode, und einer mit dem Behälter oder dem Träger elektrisch leitend verbundenen Elektrode, insbesondere einer ein- oder mehrteiligen Gegen- bzw. Abscheideelektrode angelegt, insbesondere durch Steuermittel gesteuert, werden bzw. sein.

Gleichermaßen können eine oder mehrere Elektroden des Elektroabscheidemittels, insbesondere die vorstehend genannte Abscheide- und/oder Gegenelektrode, relativ zu der Aufnahme, insbesondere motorisch, verstellbar sein bzw. verstellt werden. Hierdurch kann in einer Ausführung beispielsweise eine Interferenz mit einem Schichtmittel der Anlage vermieden werden. Zusätzlich oder alternativ kann so die elektrostatische Abscheidung bzw. das durch die angelegte Spannung bewirkte elektrische Feld vorgegeben, insbesondere verändert werden. So kann beispielsweise durch Umorientierung der Abscheideelektrode eine Strömung abzuscheidender Partikel bzw. abzuscheidenden Gases variiert und/oder durch Entfernen von der Gegenelektrode die Stärke des elektrischen Felds verändert und so jeweils dem Prozess angepasst werden.

In einer Weiterbildung ist eine verstellbare Elektrode verfestigungsmittelfest bzw. an dem Verfestigungsmittel angeordnet. Auf diese Weise kann die Elektrode vorteilhaft eine Bewegung des Verstellmittels mitmachen, wobei die verfestigungsmittelfeste Elektrode ihrerseits noch an dem Verstellmittel verstellbar oder stationär festgelegt sein kann.

In einer Ausführung reinigt ein Reinigungsmittel des Elektroabscheidemittels eine Abscheideelektrode des Elektroabscheidemittels bzw. ist hierzu vorgesehen bzw. eingerichtet. Das Reinigungsmittel kann die Abscheideelektrode insbesondere kontinuierlich, etwa durch Spülen, oder intermittierend, etwa durch Klopfen mit einem Hammerwerk oder dergleichen, vor, während und/oder nach dem Verfestigen einer Schicht reinigen bzw. hierzu vorgesehen bzw. eingerichtet sein.

In einer Ausführung ionisiert ein Ionisationsmittel des Elektroabscheidemittels Gas in dem Bereich zwischen einer zu verfestigenden und/oder verfestigten Schicht des Materials und dem Verfestigungsmittel, aus dem Partikel und/oder Gas abzuscheiden sind, insbesondere vor, während und/oder nach dem lokalen Verfestigen dieser Schicht bzw. ist hierzu vorgesehen bzw. eingerichtet. Das Ionisationsmittel kann insbesondere die Abscheide- und/oder Sprühelektrode aufweisen, die durch eine entsprechend angelegte Spannung das Gas ionisieren, das seinerseits Partikel elektrisch laden und so deren elektrostatische Abscheidung verstärken kann. Wenn eine solche Verstärkung nicht erforderlich ist, insbesondere die Partikel bzw. das Gas, beispielsweise durch das Verfestigen, bereits geladen sind, kann eine solche Ionisierung auch entfallen. Gleichermaßen kann die Ionisierung auch durch einen von der Abscheide- und Gegenelektrode verschiedenen Ionisator bzw. Ionisierer erfolgen. Entsprechend kann das Ionisationsmittel die Abscheide- und/oder Sprühelektrode und/oder einen hiervon verschiedenen Ionisator aufweisen.

Nach einem Aspekt der vorliegenden Erfindung werden zur generativen Herstellung und/oder Reparatur von Bauteilen, insbesondere von Gasturbinen, mittels einer hier beschriebenen Anlage aufeinanderfolgend bzw. wiederholt, insbesondere in an sich bekannter Weise Schichten des Materials auf Schichten bereits verfestigten Materials angeordnet, insbesondere durch das Schichtmittel, und diese durch das Verfestigungsmittel lokal verfestigt und mit der jeweils benachbarten Schicht bereits verfestigten Materials verbunden.

Das Elektroabscheidemittel scheidet vor, während und/oder nach dem lokalen Verfestigen einer oder mehrerer dieser Schichten elektrostatisch Partikel und/oder Gas aus dem Bereich zwischen einer zu verfestigenden und/oder verfestigten Schicht des Materials und dem Verfestigungsmittel ab. Insbesondere kann das Verfestigen und das Abscheiden nacheinander oder parallel erfolgen, wobei das Abscheiden zusätzlich vor und/oder nach dem Verfestigen erfolgen kann. So können vorteilhafterweise durch ein dem Verfestigen vorangehendes Abscheiden bereits Fremd- und/oder durch das Ausgeben und/oder Verteilen eingetragene Partikel abgeschieden werden, um eine Störung bereits bei Beginn der Verfestigung zu reduzieren, insbesondere wenigstens im Wesentlichen zu vermeiden. Durch ein Abscheiden parallel zu dem Verfestigen kann vorteilhafterweise eine Störung der Verfestigung durch beim Verfestigen entstehenden, insbesondere zu Partikeln kondensierten, Schmauch, reduziert, vorzugsweise wenigstens im Wesentlichen vermieden, werden. Durch ein dem Verfestigen nachfolgendes Abscheiden kann vorteilhafterweise ein Ablegen von beim Verfestigen entstandenen, insbesondere zu Partikeln kondensierten, Schmauch und/oder von Fremdpartikeln reduziert, vorzugsweise wenigstens im Wesentlichen vermieden, werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Anlage bei der generativen Herstellung oder Reparatur eines Bauteils nach einer Ausführung der vorliegenden Erfindung; und
- Fig. 2: eine Anlage bei der generativen Herstellung oder Reparatur nach betriebsinterner Praxis.

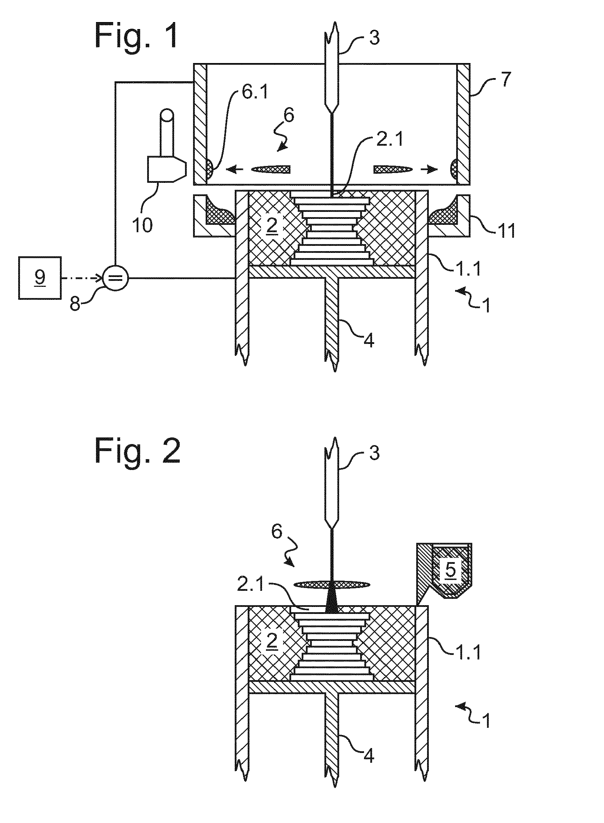

Fig. 2 zeigt zu Erläuterungszwecken eine Anlage bei der generativen Herstellung oder Reparatur eines Bauteils nach betriebsinterner Praxis.

Die Anlage weist eine Aufnahme mit einem Behälter 1 mit zu verfestigendem Material 2 und einem relativ zu dem Behälter verfahrbaren Träger 4, ein Verfestigungsmittel in Form eines verfahrbaren Laserkopfes 3 zum schichtweisen, lokalen Verfestigen des zu verfestigenden Materials, und ein Schichtmittel zum aufeinanderfolgenden Anordnen von Schichten des zu verfestigenden Materials auf Schichten bereits verfestigten Materials mit einem relativ zu der Aufnahme verfahrbaren Ausgabe- und Verteilmittel 5 zum Ausgeben und Verteilen von zu verfestigendem Material zu einer zu verfestigenden Schicht des Materials auf.

In aufeinanderfolgenden Schritten werden wiederholt der Träger 4 um eine Schichtdicke in dem Behälter 1 abgesenkt, durch das Schichtmittel 5 eine neue Schicht zu verfestigenden Materials auf der zuletzt verfestigten Schicht angeordnet und verteilt, und diese durch das Verfestigungsmittel 3 lokal optisch beaufschlagt und hierdurch verfestigt und mit der benachbarten, zuletzt verfestigten Schicht verbunden.

Beim Verfestigen entsteht Schmauch, der in Form von Partikeln 6 in dem Bereich zwischen der obersten, teilweise noch zu verfestigenden bzw. teilweise bereits verfestigten Schicht 2.1 des Materials und dem Verfestigungsmittel im Strahlengang des Lasers 3 kondensiert und so das Verfestigen beeinträchtigt. Dies ist in Fig. 2 durch eine unerwünschte Aufweitung des Laserstrahls angedeutet.

Um eine solche Störung zu reduzieren, vorzugsweise wenigstens im Wesentlichen zu verhindern, scheidet ein Elektroabscheidemittel einer Anlage nach einer Ausführung der vorliegenden Erfindung elektrostatisch Partikel 6 aus dem Bereich zwischen der der obersten, teilweise noch zu verfestigenden bzw. teilweise bereits verfestigten Schicht 2.1 des Materials 2 und dem Verfestigungsmittel 3 ab, wie dies in Fig. 1 gezeigt ist. Dabei sind einander entsprechende Merkmale durch identische Bezugszeichen identifiziert, so dass auf die vorstehende Beschreibung Bezug genommen und nachfolgend nur auf Unterschiede eingegangen wird. Das Ausgabe- und Verteilmittel 5 ist in Fig. 1 nicht dargestellt, es kann beispielsweise jeweils im Wechsel zu dem Elektroabscheidemittel an dem Behälter 1 angeordnet werden. In einer anderen Ausführung kann es in seiner in Fig. 2 angedeuteten Nichtgebrauchs- bzw. Parkstellung auch innerhalb oder außerhalb einer nachfolgend erläuterten Abscheideelektrode 7 des Elektroabscheidemittels angeordnet werden bzw. sein.

Das Elektroabscheidemittel weist die bereits genannte Abscheideelektrode 7 auf. Diese umgibt im Ausführungsbeispiel ringartig den Bereich zwischen der obersten, teilweise noch zu verfestigenden bzw. teilweise bereits verfestigten Schicht 2.1 des Materials 2 und dem Verfestigungsmittel 3. In einer nicht dargestellten Abwandlung kann die Abscheideelektrode beispielsweise auch ein oder mehrere Platten aufweisen, die in Fig. 1 seitlich neben und/oder über dem Behälter 1 angeordnet und gegen diesen elektrisch isoliert sind bzw. werden.

Das Elektroabscheidemittel weist weiter eine behälterfeste Gegenelektrode auf, die im Ausführungsbeispiel durch eine Behälterwand 1.1 des Behälters 1 zum Begrenzen des zu verfestigenden Materials 2 gebildet ist.

Weiter weist das Elektroabscheidemittel eine Spannungsquelle 8 zum Anlegen einer Spannung zwischen der Abscheide- und Gegenelektrode 7, 1.1 und ein Steuermittel 9 zum Steuern dieser Spannung auf.

Die Abscheideelektrode 7 kann behälterfest bzw. stationär zu dem Behälter 1 festgelegt oder, insbesondere durch das Steuermittel 9, relativ zu dem Behälter 1 verstellbar sein. In einer nicht dargestellten Abwandlung ist die Abscheideelektrode 7 verfestigungsmittelfest bzw. an dem Laserkopf 3 angeordnet und wird durch diesen mitbewegt.

Das Elektroabscheidemittel weist weiter ein Reinigungsmittel in Form eines Hammerwerks 10 zum intermittierenden Reinigen der Abscheideelektrode 7 von an der Abscheideelektrode abgeschiedenen Partikeln 6.1 auf.

Abscheide- und Gegenelektrode 7, 1.1 bilden ein Ionisationsmittel des Elektroabscheidemittels zum Ionisieren von Gas in dem Bereich zwischen der obersten, teilweise noch zu verfestigenden bzw. teilweise bereits verfestigten Schicht 2.1 des Materials 2 und dem Verfestigungsmittel 3.

Vor, während und/oder nach dem lokalen Verfestigen der Schicht 2.1 des Materials 2 werden durch Anlegen einer entsprechenden Spannung zwischen der Abscheide- und Gegenelektrode 7, 1.1 durch das Steuermittel 9 mittels der Spannungsquelle 8 Gas in dem Bereich zwischen der obersten, teilweise noch zu verfestigenden bzw. teilweise bereits verfestigten Schicht 2.1 des Materials 2 und dem Verfestigungsmittel 3 ionisiert und die dadurch elektrisch geladenen Partikel 6 elektrostatisch an der Abscheideelektrode 7 abgeschieden. Intermittierend reinigt das Hammerwerk 10 durch Klopfen die Abscheideelektrode 7 von daran abgeschiedenen Partikeln 6.1, die nach unten in einen Sammelbunker 11 fallen.

Obwohl in der vorhergehenden Beschreibung exemplarische Ausführungen erläutert wurden, sei darauf hingewiesen, dass eine Vielzahl von Abwandlungen möglich ist. So kann beispielsweise anstelle von Partikeln 6 auch Gas elektrostatisch abgeschieden werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Behälter
- 1.1: Behälterwand (Gegen-/Sprühelektrode)
- 2: Material
- 2.1: oberste, zu verfestigende, teilweise bereits verfestigte Schicht
- 3: Laserkopf (Verfestigungsmittel)
- 4: Träger (Schichtmittel)
- 5: Ausgabe- und Verteilmittel (Schichtmittel)
- 6: Partikel
- 6.1: abgeschiedene Partikel
- 7: Abscheideelektrode
- 8: Spannungsquelle
- 9: Steuermittel
- 10: Hammerwerk (Reinigungsmittel)
- 11: Sammelbunker

## Patentansprüche

1. Anlage zur generativen Herstellung und/oder Reparatur von Bauteilen, insbesondere von Gasturbinen, mit einem Verfestigungsmittel (3) zum schichtweisen, lokalen, insbesondere optischen, thermischen und/oder chemischen, Verfestigen von, insbesondere pulverförmigem, körnigem und/oder flüssigem, Material, **gekennzeichnet durch**
ein Elektroabscheidemittel (1.1, 7-10) zum elektrostatischen Abscheiden von Partikeln (6) und/oder Gas aus einem Bereich zwischen einer zu verfestigenden und/oder verfestigten Schicht (2.1) des Materials und dem Verfestigungsmittel (3).

2. Anlage nach dem vorhergehenden Anspruch, **gekennzeichnet durch** eine Aufnahme (1, 4) für das Material (2), insbesondere mit einem Behälter (1) und/oder einem Träger (4), und/oder ein Schichtmittel (5) zum aufeinanderfolgenden Anordnen von zu verfestigenden Schichten des Materials auf Schichten bereits verfestigten Materials, insbesondere mit einem, insbesondere relativ zu der Aufnahme verstellbaren, Ausgabemittel (5) zum Ausgeben von zu verfestigendem Material und/oder Verteilmittel (5) zum Verteilen von Material zu einer zu verfestigenden Schicht des Materials.

3. Anlage nach dem vorhergehenden Anspruch, **dadurch gekennzeichnet, dass** wenigstens eine Elektrode (1.1, 7) des Elektroabscheidemittels aufnahmefest, insbesondere behälter- oder trägerfest, oder relativ zu der Aufnahme ist.

4. Anlage nach dem vorhergehenden Anspruch, **dadurch gekennzeichnet, dass** eine verstellbare Elektrode verfestigungsmittelfest ist.

5. Anlage nach einem der vorhergehenden Ansprüche, **dadurch gekennzeichnet, dass** das Elektroabscheidemittel eine ein- oder mehrteilige Abscheideelektrode (7), eine ein- oder mehrteilige Gegenelektrode (1.1), die von der Abscheideelektrode insbesondere wenigstens 1 cm und/oder höchstens 100 cm beabstandet ist, eine Spannungsquelle (8) zum Anlegen einer Gleich- oder Wechselspannung zwischen der Abscheide- und Gegenelektrode, insbesondere von wenigstens 15 kV und/oder höchstens 85 kV, und/oder ein Steuermittel (9) zum Steuern einer zwischen der Abscheide- und Gegenelektrode angelegten Spannung aufweist.

6. Anlage nach dem vorhergehenden Anspruch, **dadurch gekennzeichnet, dass** das Elektroabscheidemittel ein Reinigungsmittel (10) zum, insbesondere kontinuierlichen oder intermittierenden, Reinigen der Abscheideelektrode (7), aufweist.

7. Anlage nach einem der vorhergehenden Ansprüche, **dadurch gekennzeichnet, dass** das Elektroabscheidemittel ein Ionisationsmittel (1.1, 7-9) zum Ionisieren von Gas in dem Bereich zwischen einer zu verfestigenden und/oder verfestigten Schicht (2.1) des Materials und dem Verfestigungsmittel (3) aufweist.

8. Verfahren zur generativen Herstellung und/oder Reparatur von Bauteilen, insbesondere von Gasturbinen, mittels einer Anlage nach einem der vorhergehenden Ansprüche, wobei aufeinanderfolgend Schichten des, insbesondere pulverförmigen, körnigen und/oder flüssigen, Materials auf Schichten bereits verfestigten Materials angeordnet werden und das Verfestigungsmittel (3) diese lokal, insbesondere optisch, thermisch und/oder chemisch, verfestigt und mit der jeweils benachbarten Schicht bereits verfestigten Materials verbindet, und wobei das Elektroabscheidemittel (1.1, 7-10) elektrostatisch Partikel (6) und/oder Gas aus dem Bereich zwischen einer zu verfestigenden und/oder verfestigten Schicht (2.1) des Materials und dem Verfestigungsmittel (3) abscheidet.

9. Verfahren nach dem vorhergehenden Anspruch, **dadurch gekennzeichnet, dass** das Elektroabscheidemittel vor, während und/oder nach dem lokalen Verfestigen einer Schicht des Materials elektrostatisch Partikel und/oder Gas aus dem Bereich abscheidet.

10. Verfahren nach einem der vorhergehenden Ansprüche, **dadurch gekennzeichnet, dass** ein Steuermittel (9) des Elektroabscheidemittels eine zwischen einer Abscheide- und einer Gegenelektrode (7, 1.1) des Elektroabscheidemittels angelegte Spannung steuert, insbesondere in Abhängigkeit von einem lokalen Verfestigen einer Schicht des Materials und/oder einer, insbesondere gemessenen, Konzentration von abzuscheidenden Partikeln und/oder abzuscheidendem Gas in dem Bereich.

11. Verfahren nach dem vorhergehenden Anspruch, **dadurch gekennzeichnet, dass** ein Reinigungsmittel (10) des Elektroabscheidemittels eine Abscheideelektrode (7) des Elektroabscheidemittels, insbesondere kontinuierlich oder intermittierend, reinigt.

12. Verfahren nach einem der vorhergehenden Ansprüche, **dadurch gekennzeichnet, dass** ein Ionisationsmittel (1.1, 7-9) des Elektroabscheidemittels Gas in dem Bereich, insbesondere vor, während und/oder nach dem lokalen Verfestigen einer Schicht des Materials, ionisiert.

13. Verfahren nach einem der vorhergehenden Ansprüche, **dadurch gekennzeichnet, dass** wenigstens eine Elektrode des Elektroabscheidemittels, insbesondere vor, während und/oder nach dem lokalen Verfestigen einer Schicht des Materials, relativ zu der Aufnahme (1, 4) für das Material (2) verstellt wird.
